(19) Europäisches Patentamt
European Patent Office
Office européen des brevets

(11) Veröffentlichungsnummer: **0 000 733**
**B1**

(12) # EUROPÄISCHE PATENTSCHRIFT

(21) Anmeldenummer: **78100510.3**

(22) Anmeldetag: **26.07.78**

(51) Int. Cl.³: **C 08 L 81/06, C 08 L 69/00**

(54) **Polyarylsulfon-Polycarbonat-Abmischungen und ihre Verwendung zur Herstellung von Extrusionsfolien**

(30) Priorität: **04.08.77 DE 2735144**
**09.12.77 DE 2755025**

(43) Veröffentlichungstag der Anmeldung:
**21.02.79 Patentblatt 79/04**

(45) Bekanntmachung des Hinweises auf die Patenterteilung:
**20.08.80 Patentblatt 80/17**

(84) Benannte Vertragsstaaten:
**DE FR GB NL**

(56) Entgegenhaltungen:
**Keine**

(73) Patentinhaber: **Bayer Ag**
**Zentralbereich Patente, Marken und Lizenzen**
**D - 5090 Leverkusen 1, Bayerwerk (DE)**

(72) Erfinder: **Binsack, Rudolf, Dr.**
**Bethelstrasse 4a**
**D - 4150 Krefeld (DE)**
**Reese, Eckart, Dr.**
**Aggerstrasse 22**
**D - 4047 Dormagen (DE)**
**Wank, Joachim, Ing.grad.**
**Zülpicher Strasse 7**
**D - 4047 Dormagen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 000 733 B1

# Polyarylsulfon-Polycarbonat-Abmischungen und ihre Verwendung zur Herstellung von Extrusionsfolien

Gegenstand der vorliegenden Erfindung sind Polyarylsulfon-Polycarbonat-Abmischungen aus 90 Gew.-% bis 60 Gew.-% linearem Polyarylsulfon und 10 Gew.-% bis 40 Gew.-% Homopolycarbonat aus Bis-2-(4-hydroxyphenyl)-propan (Bisphenul A) oder Copolycarbonat aus mindestens 30 Mol-% Bisphenol A und bis zu 70 Mol-% aus anderen Diphenolen, wobei die Polycarbonatkomponente ein $\overline{M}w$ (Gewichtsmittelmolekulargewicht) größer 60 000 hat.

Vorzugsweise liegt das Mischungsverhältnis zwischen 85 Gew.-% bis 70 Gew.-% an Polyarysulfon und zwischen 15 Gew.-% und 30 Gew.-% an Polycarbonat.

Mischungen aus Polyaryläthersulfonen und Polycarbonaten sind bereits beschrieben (siehe DT—OS 1 719 244 und US—PS 3 365 517); ebenfalls ihre Verwendung zur Herstellung von Folien (Seite 21 der DT—OS 1 719 244).

Durch diese Mischungen sollen einerseits die unerwünschte Belastungsversprödung der Polyaryläthersulfone und andererseits die Spannungsrißanfälligkeit der Polycarbonate gegenüber Lösungsmitteln behoben werden (Seite 2 der DT—OS).

Derartige Mischungen können für die Herstellung von Gießfolien verwendet werden (Beispiele 8 und 9 der DT—OS sowie 14 und 16 von US—PS). In den genannten Literaturstellen sind als Polycarbonate die üblicherweise für Spritzguß und Extrusion geeigneten Polycarbonate angegeben, deren $\overline{M}w$ beispielsweise etwa 35000 beträgt (Beispiel 2 der DT—OS). Folien aus derartigen Mischungen zeigen jedoch eine starke Neigung zu Spannungsrißkorrosion.

Wird die in der DT—OS 17 19 244 bzw. US—PS 3.365.517 beschriebene Polycarbonatkomponente mit einem $\overline{M}w$ von 35.000 durch ein hochmolekulares, ohne Molekulargewichtsabbau nicht extrudierbares Polycarbonat ersetzt und aus derartigen Mischungen Gießfolien hergestellt, zeigen diese Produkte ebenfalls eine starke Neigung zu Spannungsrißkorrosion sowie mangelhafte mechanische Eigenschaftswerte.

Demgegenüber war es überraschend, daß die erfindungsgemäßen Polyarylsulfon-Polycarbonat-Abmischungen Extrusionsfolien mit einem ausgezeichneten Eigenschaftsbild liefern, obwohl sie als Polycarbonatkomponente ein ohne Molekulargewichtsabbau nicht extrudierbares Polycarbonat enthalten und obwohl die Abmischungen nicht zur Herstellung von Gießfolien geeignet sind.

Erfindungsgemäß geeignete Polyarylsulfone sind grundsätzlich alle bekannten linearen aromatischen Polysulfone und Polyäthersulfone mit $\overline{M}w$ (Gewichtsmittellmolekulargewicht gemessen beispielsweise mittels Lichtstreuung) zwischen etwa 15000 und etwa 55000, vorzugsweise zwischen etwa 20000 und 40000.

Derartige Polyarylsulfone sind in den folgenden Literaturstellen beispielsweise beschrieben: in den bereits genannten DT—OS 1 719 244 und US—PS 3 365 517.

Vorzugsweise geeignete Polyarylsulfone sind die aus Bisphenolen und Dihalogenarylsulfonen erhältlichen der nachfolgenden Struktureinheiten der Formel (I)

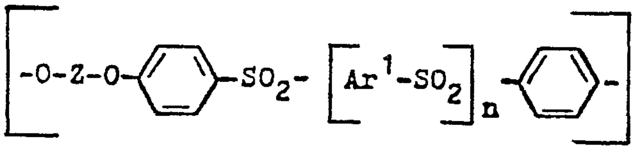

(I)

worin $Ar^1$ einen Biphenylen- oder Oxibiphenylen-Rest, n 0 oder 1, Z einen p-Phenylenrest, m-Phenylenrest oder zweibindigen Rest der folgenden Formel (II)

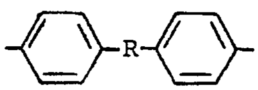

(II)

entspricht, worin R einen zweiwertigen $C_1$—$C_{12}$-Alkylen- bzw. Alkyliden-Rest, $C_5$—$C_{12}$-Cycloalkylen- bzw. Cycloalkylidenrest, $C_7$—$C_{12}$-Aralkylen- bzw. Aralkyliden-Rest oder $C_8$—$C_{12}$-Arylen-bisalkyliden-Rest oder die Gruppierung —O—, —S—, —SO—, —$SO_2$—, —CO— oder eine einfache Bindung bedeutet.

Die Gewichtsmittelmolekulargewichte der erfindungsgemäß geeigneten Polycarbonate sollen über 60000, vorzugsweise zwischen 65000 und 120000 und insbesondere zwischen 75000 und 95000 liegen. (Ermittelt aus der Intrinsic-Viskosität, gemessen in $CH_2Cl_2$-Lösung).

Aromatische Polycarbonate im Sinne der Erfindung sind Homopolycarbonate aus Bis-2-(4-hydroxyphenyl)-propan (Bisphenol-A) sowie Copolycarbonate aus mindestens 30 Mol-%, vorzugsweise mindestens 60 Mol-% und insbesondere mindestens 80 Mol-% an Bisphenol A und bis zu 70 mol-% vorzugsweise bis zu 40 Mol-% und insbesondere bis zu 20 Mol-% aus anderen Diphenolen. (Die Molprozente beziehen sich jeweils auf Gesamtmolmenge an einkondensierten Diphenolen).

Als andere Diphenole sind andere Bis-(hydroxyaryl)-$C_1$—$C_8$-alkane als Bisphenol A sowie Bis-(hydroxyaryl)-$C_5$—$C_6$-cycloalkane geeignet, insbesondere Bis-(4-hydroxyphenyl)-$C_1$—$C_8$-alkane und Bis-(4-hydroxyphenyl)-$C_5$—$C_6$-cycloalkane.

Als andere Diphenole sind beispielsweise Bis-(4-hydroxyphenyl)-methan (Bisphenol F),
2,4-Bis-(4-hydroxyphenyl)-butan,
1,1-Bis-(4-hydroxyphenyl)-cyclohexan,
2,2-Bis-(3-methyl-4-hydroxyphenyl)-propan,
Bis-(3,5-dimethyl-4-hydroxyphenyl)-methan,
2,2-Bis-(3,5-dimethyl-4-hydroxyphenyl)-propan,
2,4-Bis-(3,5-dimethyl-4-hydroxyphenyl)-2-methylbutan und
1,1-Bis-(3,5-dimethyl-4-hydroxyphenyl)-cyclohexan geeignet.

Erfindungsgemäß bevorzugte Copolycarbonate enthalten Bisphenol A und 1,1-Bis-(4-hydroxyphenyl)-cyclohexan (Bisphenol Z).

Die erfindungsgemäßen Polyarylsulfon-Polycarbonat-Abmischungen können nach folgenden vier Verfahren hergestellt werden:

1. Durch gemeinsames Aufschmelzen des Polycarbonats und des Polyarylsulfons unter gleichzeitiger oder nachfolgender inniger Vermischung der Schmelze und anschließender Extrusion der homogenisierten Schmelze in einer geeigneten Apparatur.
2. Durch Aufschmelzen des Polyarylsulfons in einer geeigneten Apparatur und Eindosierung des Polycarbonats in die Schmelze des Polyarylsulfons, Homogenisierung und anschließende Extrusion des Gemisches in einer geeigneten Apparatur.
3. Durch Mischen der Lösungen des Polycarbonats und des Polyarylsulfons, Ausdampfen des Lösungsmittels unter Aufschmelzen der Mischung und gleichzeitige Extrusion.
4. Durch Zumischen einer Lösung des Polycarbonats zur Schmelze des Polyarylsulfons, Ausdampfen des Lösungsmittels unter Aufschmelzen des Polycarbonats, Homogenisierung der Schmelze und anschließende Extrusion in einer geeigneten Apparatur.

Bevorzugte Mischungsverfahren sind die Verfahren 2 bis 4, besonders bevorzugt ist das Mischungsverfahren 4.

Als geeignete Apparaturen für die Herstellung der erfindungsgemäßen Polycarbonatgemische sind Walzen, Knet- und Schneckenmaschinen zu verstehen. Bevorzugte Apparaturen sind Schneckenmaschinen, insbesondere Zweiwellenschneckenmaschinen.

Die Herstellung der Extrusionsfolien aus den erfindungsgemäßen Abmischungen kann in bekannter Weise z.B. auf normalen, dem Stand der Technik gemäßen eingängigen Dreizonenschnecken erfolgen, wobei die Verformung zu Folien sowohl über Breitschlitzdüsen zu Fachfolien, als auch über Folienblasköpfen zu Blasfolien erfolgen kann.

Die erfindungsgemäßen Extrusionsfolien haben ein besonders vorteilhaftes Eigenschaftsbild, was sie beispielsweise für die Verwendung auf dem Elektrosektor geeignet macht.

Unter anderem besitzen die erfindungsgemäßen Extrusionsfolien eine hohe mechanische Festigkeit, eine hohe Beständigkeit gegen Spannungsrißkorrosion in der Hitze und gegenüber organischen Flüssigkeiten, eine hohe Wärmeformbeständigkeit und Dauerwärmebeständigkeit. Insbesondere sind sie durch ihre Beständigkeit gegen ungesättigte Polyesterharzlösungen ausgezeichnet.

Den erfindungsgemäßen Abmischungen können noch die in der Polycarbonat- und Polysulfon-Chemie bekannten Additive bzw. Füllstoffe zugesetzt werden.

Erwähnt seien in diesem Zusammenhang beispielsweise Farbstoffe, Pigmente, Entformungsmittel, Stabilisatoren gegen Feuchtigkeits-, Hitze- und UV-Einwkrkung, Gleitmittel, Füllstoffe, wie Glaspulver, Quarzerzeugnisse, Graphit, Molybdänsulfid, Metallpulver, Pulver höherschmelzender Kunststoffe, z.B. Polytetrafluoräthylenpulver, natürliche Fasern, wie Baumwolle, Sisal und Asbest, ferner Glasfasern der verschiedensten Art, Metallfäden sowie während des Verweilens in der Schmelze der Polycarbonate stabile und die Polycarbonate nicht merklich schädigende Fasern.

Beispiel 1:

80 Gew.-% eines linearen Polyarylsulfons, hergestellt durch Kondensation von 4,4'-Dichlordiphenylsulfon und Bis-2-(4-hydroxyphenyl)-Propan mit einem $\overline{M}_w$ von 20.000 und 20 Gew.-% eines Polycarbonats auf Basis Bisphenol A mit einem $\overline{M}_w$ von 95.000 werden zusammen in einer 2-Wellenschnecke aufgeschmolzen, wobei die Zylindertemperaturen 340°C betragen. Die Schmelze wird als Strang ausgepreßt. Der Strang wird gekühlt und granuliert. Das erhaltene Granulat wird auf einer Einwellenschnecke mit Entgasungszone aufgeschmolzen, und die Schmelze über eine Breitschlitzdüse ausgedrückt und über eine Chill-Roll-Anlage zu ca. 40 $\mu$m dicken Folien abgezogen. Die erhaltenen Eigenschaftswerte sind in nachfolgender Tabelle aufgeführt.

Beispiel 2:

Herstellung von Folien gem. Beispiel 1, jedoch unter Verwendung von 70 Gew.-% eines Polyarylsulfons gem. Beispiel 1 und 30 Gew.-% eines Bisphenol-A-Polycarbonates, dessen $M_w$ 75.000 beträgt. Die Eigenschaftswerte der erhaltenen Folie sind in nachfolgender Tabelle aufgeführt.

Beispiel 3: (Vergleichsbeispiel)

Die Polymeren gem. Beispiel 1 wurden gemeinsam in Methylenchlorid gelöst, wobei die Konzentration der Polymermischung in Methylenchlorid 17 Gew.-% beträgt. Die Lösung wurde nach Filtrieren und Entgasen in bekannter Weise auf Trommelgießmaschinen zu ca. 40 $\mu$m dicken Folien vergossen. Zur Entfernung des Restgehaltes an Lösungsmitteln wurde die erhaltene Folie bei 120°C nachgetrocknet. Die Eigenschaftswerte der Folie sind in nachfolgender Tabelle aufgeführt.

Beispiel 4: (Vergleichsbeispiel)

Aus 80 Gew.-% eines Polysulfons gem. Beispiel 1 und 20 Gew.-% eines Bisphenol-A-Polycarbonats, dessen $\bar{M}_w$ 30.000 beträgt, wird ein Granulat gem. Beispiel 1 hergestellt und auf einer Einwellenschnecke mit Blaskopf zu ca. 60 $\mu$m dicken Folien verarbeitet. Die Zylindertemperaturen betrugen in der Einzugszone 280°C und in den folgenden Zonen 310°C. Die Düsentemperatur wurde ebenfalls auf 310°C eingestellt. Der Düsenspalt betrug 0,8 mm. Der Schlauch wurde im Verhältnis 1:4 aufgeweitet. Die Abzugsgeschwindigkeit der Folienwicklers wurde so eingestellt, daß bei den gewählten Schneckendrehzahlen die gewünschte Foliendicke von 60 $\mu$m erhalten wurde. Die Eigenschaftswerte der erhaltenen Folie sind in beiliegender Tabelle aufgeführt.

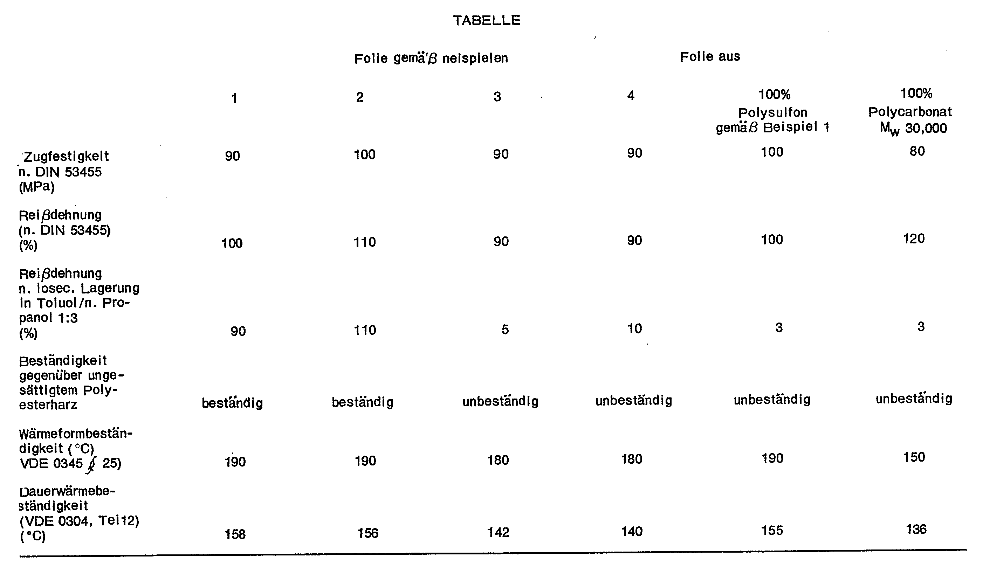

**Patentansprüche**

1. Polyarylsulfon-Polycarbonat-Abmischungen aus 90 Gew.-% bis 60 Gew.-% linearem Polyarylsulfon und aus 10 Gew.-% bis 40 Gew.-% Homopolycarbonat aus Bis-2-(4-hydroxyphenyl)-propan (Bisphenol A) oder Copolycarbonat aus mindestens 30 Mol-% Bisphenol A und bis zu 70 Mol-% aus anderen Diphenolen, wobei die Polycarbonatkomponente ein $\bar{M}w$ (Gewichtsmittelmolekulargewicht) größer als 60 000 hat.

2. Abmischungen gemäß Anspruch 1, dadurch gekennzeichnet, daß das $\bar{M}w$ der Polycarbonatkomponente zwischen 65 000 und 120 000 liegt.

3. Abmischungen gemäß Anspruch 1, dadurch gekennzeichnet, daß das $\bar{M}w$ der Polycarbonatkomponente zwischen 75 000 und 95 000 liegt.

4. Abmischungen gemäß Ansprüche 1 bis 3, dadurch gekennzeichnet, daß sie 85 Gew.-% bis 70 Gew.-% lineares Polyarylsulfon und 15 Gew.-% bis 30 Gew.-% Polycarbonat enthalten.

5. Verwendung der Abmischungen gemäß Ansprüche 1 bis 4 zur Herstellung von Extrusionsfolien.

6. Extrusionsfolien erhältlich aus den Abmischungen der Ansprüche 1 bis 4.

**Claims**

1. Polyaryl-sulphone/polycarbonate mixtures comprising 90% by weight to 60% by weight of a linear polyaryl-sulphone and 10% by weight to 40% by weight of a homopolycarbonate of bis-2-(4-hydroxyphenyl)-propane (bisphenol A) or a copolycarbonate of at least 30 mol % of bisphenol A and up to 70 mol % of other diphenols, the polycarbonate component having a $\bar{M}w$ (weight-average molecular weight) greater than 60,000.

2. Mixtures according to claim 1, characterised in that the $\bar{M}w$ of the polycarbonate component is between 65,000 and 120,000.

3. Mixtures according to claim 1, characterised in that the $\bar{M}w$ of the polycarbonate component is between 75,000 and 95,000.

4. Mixtures according to claims 1 to 3, characterised in that they contain 85% by weight to 70% by weight of a linear polyaryl-sulphone and 15% by weight to 30% by weight of a polycarbonate.

5. The use of the mixtures according to claims 1 to 4 for producing extruded films.

6. Extruded films obtainable from the mixtures of claims 1 to 4.

**Revendications**

1. Des mélanges de polyarylsulfone et de polycarbonate formés de 90 à 60% en poids d'une polyarylsulfone linéaire et de 10 à 40% en poids d'un homopolycarbonate dérivé de bis-2-(4-hydroxyphényl)-propane (bisphénol A) un d'un copolycarbonate dérivé d'au moins 30 moles % de bisphénol A et d'une proportion allant jusqu'à 70 moles % d'autres diphénols, le composant polycarbonate ayant une valeur $\bar{M}_P$ (moyenne en poids du poids moléculaire) supérieure à 60 000.

2. Mélanges suivant la revendication 1, caractérisés en ce que la valeur $\bar{M}_P$ du composant polycarbonate se situe entre 65 000 et 120 000.

3. Mélanges suivant la revendication 1, caractérisés en ce que la valeur $\bar{M}_P$ du composant polycarbonate se situe entre 75 000 et 95 000.

4. Mélanges suivant l'une quelconque des revendications 1 à 3, caractérisés en ce qu'ils renferment 85 à 70% en poids de polyarylsulfone linéaire et 15 à 30% en poids de polycarbonate.

5. Application des mélanges suivant l'une quelconque des revendications 1 à 4 à la production de pellicules extrudées.

6. Des pellicules extrudées pouvant être obtenues à partir des mélanges suivant l'une quelconque des revendications 1 à 4.

TABELLE

| | Folie gemäß neispielen | | | | Folie aus | |
|---|---|---|---|---|---|---|
| | 1 | 2 | 3 | 4 | 100% Polysulfon gemäß Beispiel 1 | 100% Polycarbonat $M_W$ 30,000 |
| Zugfestigkeit n. DIN 53455 (MPa) | 90 | 100 | 90 | 90 | 100 | 80 |
| Reißdehnung (n. DIN 53455) (%) | 100 | 110 | 90 | 90 | 100 | 120 |
| Reißdehnung n. losec. Lagerung in Toluol/n. Propanol 1:3 (%) | 90 | 110 | 5 | 10 | 3 | 3 |
| Beständigkeit gegenüber ungesättigtem Polyesterharz | beständig | beständig | unbeständig | unbeständig | unbeständig | unbeständig |
| Wärmeformbeständigkeit (°C) VDE 0345 § 25) | 190 | 190 | 180 | 180 | 190 | 150 |
| Dauerwärmebeständigkeit (VDE 0304, Teil2) (°C) | 158 | 156 | 142 | 140 | 155 | 136 |